Europäisches Patentamt

European Patent Office

Office européen des brevets

(19)

(11) Veröffentlichungsnummer: **0 583 716 A2**

# EUROPÄISCHE PATENTANMELDUNG

(12)

(21) Anmeldenummer: **93112769.0**

(51) Int. Cl.5: **B60R 16/02**

(22) Anmeldetag: **10.08.93**

(30) Priorität: **20.08.92 DE 4227577**

(43) Veröffentlichungstag der Anmeldung:
**23.02.94 Patentblatt 94/08**

(84) Benannte Vertragsstaaten:
**DE FR GB IT**

(71) Anmelder: **DORNIER GMBH**
**Postfach 1420**
**D-88004 Friedrichshafen(DE)**

(72) Erfinder: **Müller, Karl-Heinz**
**Konrad-Kümmelweg 68**
**D-88045 Friedrichshafen(DE)**
Erfinder: **Butscher, Karl-Heinz**

**Mörikestrasse 7**
**D-88085 Langenargern(DE)**
Erfinder: **Leiber, Heinz**
**Theodor-Heuss-Strasse 34**
**D-71739 Oberriexingen(DE)**
Erfinder: **Brinkmeyer, Horst, Dr.**
**Dorfweg 14**
**D-71336 Waiblingen(DE)**

(74) Vertreter: **Landsmann, Ralf, Dipl.-Ing.**
**DORNIER GMBH**
**- Patentabteilung -**
**Kleeweg 3**
**D-88048 Friedrichshafen (DE)**

(54) **Verfahren zur bidirektionalen Signalübertragung.**

(57) Die Erfindung betrifft ein Verfahren zur bidirektionalen Signalübertragung zwischen einer Steuereinheit (Master) und mehreren elektronischen Baugruppen (Slaves), mit folgenden Merkmalen:
- der Master ist mit den einzelnen Slaves über jeweils eine leitende Verbindung gekoppelt, über die die bidirektionale Signalübertragung und die Stromversorgung der Slaves erfolgt,
- das Mastersignal wird spannungscodiert und die Slavesignale werden stromcodiert,
- das Mastersignal wird kontinuierlich mit festem Zeittakt gesendet, und die Slavesignale werden korreliert zum Zeittakt des Masters gesendet.

Fig. 1

EP 0 583 716 A2

Die Erfindung betrifft ein Verfahren zur digitalen bidirektionalen Signalübertragung nach dem Oberbegriff des Anspruch 1, insbesondere zur Anwendung in einem Kraftfahrzeug.

In modernen Kraftfahrzeugen gewinnt die Signalübertragung zwischen einzelnen elektrischen Baugruppen eine immer größere Bedeutung. Bekannt sind sogenannte Master-Slave-Systeme, bei der eine Steuereinheit (Master) und mehrere elektronische Baugruppen (Slaves) über eine Busleitung, die aus mehreren Einzelleitungen besteht, verbunden sind. Sowohl Master als auch Slaves senden und empfangen Signale, wobei die Sende/Empfangsberechtigung vom Master gesteuert werden. Die Busleitung umfaßt neben den Datenleitungen auch Versorgungsleitungen für die Stromversorgung der Slaves sowie Masseleitungen.

Um die Zahl der Verbindungsleitungen innerhalb der Bus-Leitung zu vermindern, wird in der DE 39 12 439 A1 vorgeschlagen, die Signale eines Senders direkt über dessen Versorgungsleitung zu übertragen, so daß der Leitungsbus nur noch eine einzelne Leitung umfaßt. Es handelt sich jedoch hierbei nicht um ein Verfahren zur bidirektionalen Kommunikation, denn die Signalübertragung ist nur in einer Richtung möglich.

Der Erfindung liegt deshalb die Aufgabe zugrunde, ein Verfahren zur digitalen bidirektionalen Signalübertragung zu schaffen, mit dem die Anzahl der Verbindungsleitungen zwischen Master und Slaves möglichst gering gehalten wird.

Diese Aufgabe wird mit dem Verfahren nach Anspruch 1 gelöst. Ausgestaltungen der Erfindung sind Gegenstand weiterer Ansprüche.

Das Verfahren basiert auf dem Master-Slave-Prinzip, wobei eine Steuereinheit (Master) mit mehreren elektronischen Baugruppen (Slaves) verbunden ist. Unter den Slaves sind hierbei z.B. Sensoren oder Schalterbaugruppen zu verstehen. Der Master ist über jeweils eine einzelne leitende Verbindung mit den Slaves verbunden, über die sowohl die Übertragung der Signale von Master und Slave als auch die Energieversorgung der Slaves erfolgt.

Der Master sendet kontinuierlich eine Folge digitaler Signale in festem Zeittakt, wobei durch geeignete Codierung sowohl Energie als auch Informationen an die Slaves übertragen werden. Die Senderschaltung weist einen niedrigen Innenwiderstand auf.

Zur Erhaltung der Synchronität mit den Slaves wird in den Informationspausen, in denen der Master keine Informationen sendet, kontinuierlich ein konstantes Bit-Muster im selben Zeittakt wie bei der Informationsübertragung gesendet (in folgenden auch als Taktsignal bezeichnet), so daß auch während den Informationspausen das kontinuierliche Senden des Masters mit festem Zeittakt nicht unterbrochen wird.

Der Master sendet seine Informationen (z.B. Adressen und Daten) spannungscodiert in einer Mehrphasencodierung, z.B. bi-Phase codiert, wobei ständig zwischen mehreren, im Falle der bi-Phase-Codierung zwischen zwei Spannungspegeln geschaltet wird. Dabei wird das niedrigste Spannungsniveau so gewählt, daß es höher ist als die minimale Versorgungsspannung der Slaves, so daß die Spannungsversorgung der Slaves durch das Mastersignal erfolgen kann. Eine zusätzliche externe Spannungsquelle für die Slaves ist nicht nötig. Jedoch kann bei höherem Leistungsbedarf, z.B. für Stellantriebe, an diskreten Stellern eine separate Einspeisung der Versorgung erfolgen. Die Slaves senden ihre Informationen stromcodiert in einer Mehrphasencodierung, z.B. bi-Phase-codiert oder RZ-codiert (RZ: return to zero). Das Senden der Slaves erfolgt korreliert zum Zeittakt des Masters. Dies ermöglicht gleichzeitiges Senden des Masters und eines Slaves. Die Sendeberechtigung unter mehreren Slaves wird vom Master koordiniert.

Das kontinuierliche Senden des Masters hat insbesondere den Vorteil, daß im Master und in den Slaves eine Signaldetektion nach dem Korrelationsprinzip mit entsprechend hoher Störpegelunterdrückung durchgeführt werden kann. Dadurch wird eine hohe Störfestigkeit bei der Übertragung erreicht, was insbesondere dann von Bedeutung ist, wenn die Übertragungsleitung selbst gestört ist. Ein durch den Zeittakt des Mastersignals synchronisierter Korrelationsempfänger ermöglicht die sichere Abtastung des Signals.

Der Gesamtstrom auf den einzelnen Leitungen setzt sich zusammen aus dem Laststrom des betreffenden Slaves sowie dem informationshaltigen Signalstrom. Zur Abtastung der Information des Signals wird anstatt des Gesamtstroms das Verhältnis von Laststrom zu Gesamtstrom ausgewertet. Der durch den Zeittakt des Mastersignals synchronisierte Korrelationslempfänger erlaubt die sichere Abtastung beider Ströme. Aus der Differenz der beiden Ströme wird der Signalstrom ermittelt.

Die Erfindung wird mit Hilfe von Fig. näher erläutert. Es zeigen:

Fig. 1 zwei mögliche Konfigurationen des Master-Slave-Systems

Fig. 2 eine schematische Darstellung des Master-Signals

Fig. 3 zueinander korrelierte Master- und Slave-Signale

Fig. 4 ein Slave-Signal

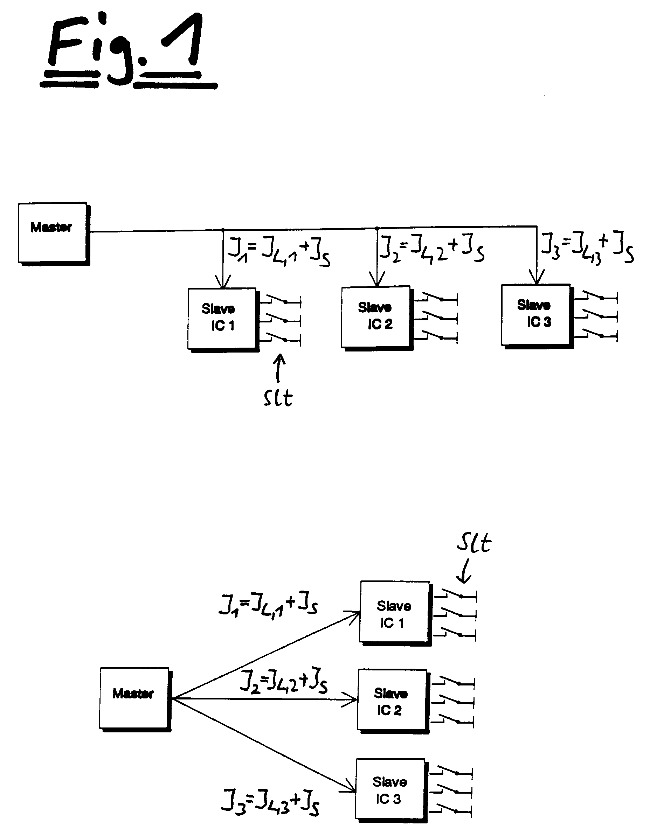

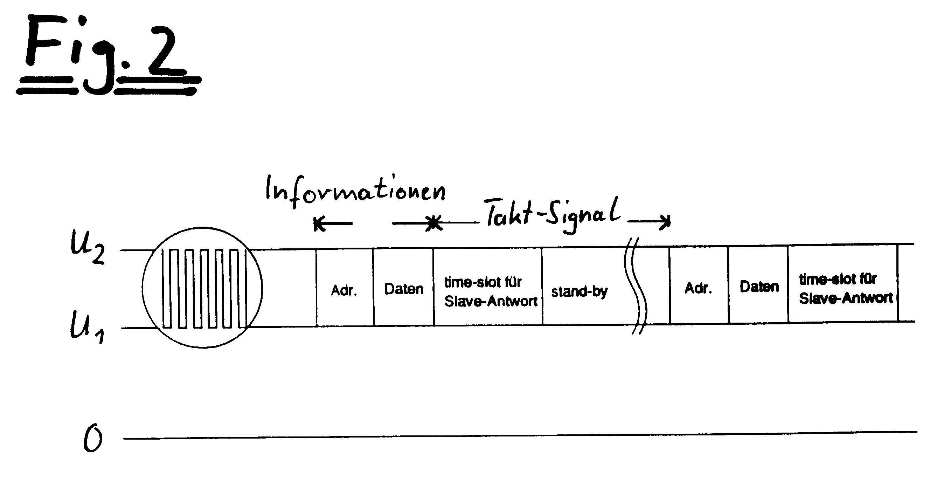

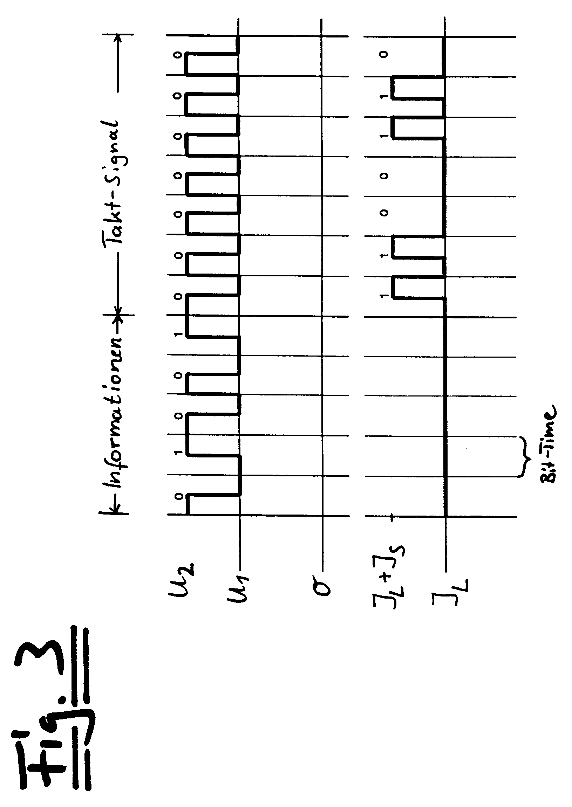

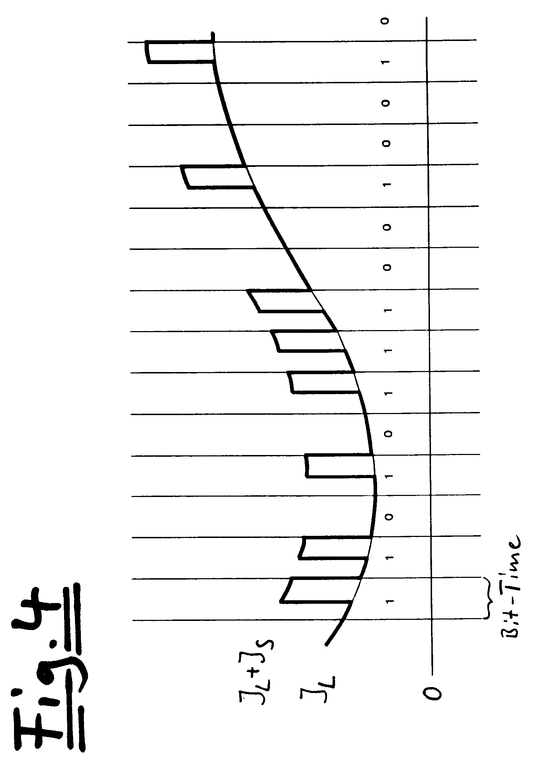

Fig.1 zeigt zwei mögliche Konfigurationen des Master-Slave-Systems. In der oberen Abbildung sind Master und Slave derart verbunden, daß von einer Hauptleitung Anschlußleitungen an die einzelnen Slaves abzweigen. In der unteren Abbildung sind Master und Slaves jeweils direkt über eine Leitung verbunden. Die Slaves können in beiden Konfigurationen als ICs realisiert werden.

Beiden Konfigurationen gemeinsam ist, daß der Kontakt zwischen Master und Slave über eine einzelne leitende Verbindung hergestellt ist, durch die die Signalübertragung sowie gleichzeitig die Energieversorgung der Slaves erfolgt. Externe Spannungsquellen für die Slaves sind daher nicht nötig. Der Summenstrom $I_i$ (der Index i bezeichnet die laufende Nr. der Slaves) auf den einzelnen Leitungen setzt sich zusammen aus dem Laststrom $I_{L,i}$ der einzelnen Slaves sowie dem informationshaltigen Signalstrom $I_S$.

Fig. 2 zeigt in schematischer Darstellung den Aufbau des Master-Signals. Es ist in dieser Ausführung bi-Phase-spannungscodiert, wobei zwischen zwei Spannungsniveaus $U_2$ und $U_1$ geschaltet wird. In zeitlicher Reihenfolge werden Informationen (Daten, Adressen) und das Taktsignal gesendet. In der gezeigten Ausführung erfolgt die Antwort der Slaves in den Informationspausen des Masters (timeslot für Slave-Antwort), in denen dieser das Taktsignal sendet. Eine zeitliche Überlappung beim Senden von Master und Slave ist jedoch ebenfalls möglich.

Wesentlich für das Verfahren ist, daß das Mastersignal kontinuierlich, ohne Unterbrechung gesendet wird. Selbst in Zeiten, in denen der Master weder Daten noch Adressen sendet und auch die Slaves nicht senden (stand by), wird fortlaufend das Taktsignal gesendet. Durch Codierung und Format des Mastersignals wird den Slaves permanent der Master-Takt zur Verfügung gestellt.

Fig. 3 zeigt zwei zueinander korrelierte Master- (oben) und Slave-Signale (unten). Beiden Signalen ist ein fester Zeittakt aufgeprägt, d.h. jede Informationseinheit (Bit) wird fortlaufend innerhalb eines konstanten Zeitabschnitts (bit-time) gesendet. Die Anfangszeiten der bit-times von Master- und Slave-Signal sind synchronisiert. Ein Slaves sendet in dieser Ausführung innerhalb der Informationspausen des Masters, in denen dieser ein konstantes Taktsignal sendet.

Das Master-Signal (oben) ist hier bi-Phase-spannungscodiert. Je nachdem, ob in der ersten Hälfte einer bit-time das höhere $U_2$ oder niedere $U_1$ Spannungsniveau angelegt ist, unterscheidet man zwischen dem Wert log 0 oder log 1.

Das Slave-Signal ist in dieser Ausführung RZ-stromcodiert. Der informationsabhängige Signalstrom $I_S$ wird in einer Phase der Bit-time gesendet, in der restlichen Zeit wird als Referenzwert der augenblickliche Laststrom $I_L$ (Summenstrom aller Verbraucher) erfaßt (=log1). Ansonsten liegt während der gesamten Bit-time nur der Laststrom vor (=log0).

Möglich ist aber auch eine bi-Phase-Codierung entsprechend des Master-Signals. Log. 0 und log1 unterscheiden sich dann durch Strom in Phase 1 oder 2 einer Bit-time. Durch diese Codierung wird eine Verdopplung des Störabstands erreicht.

Vorteilhaft ist der informationshaltige Signalanteil relativ klein im Vergleich zum Gesamtsignal. Dadurch ist die Informationsübertragung bei geringer Leistungsübertragung möglich. In einer vorteilhaften Ausführung liegt $I_S$ im Bereich von 30 - 50 mA. Durch ein Schalter-Interface kann der Signalstrom $I_S$ direkt über die abgetasteten Kontakte geführt werden. Dadurch wird gleichzeitig die Kontaktbelastung des abgetasteten Schalters gewährleistet. In Fig. 1 sind die Schalter Slt an den einzelnen Slaves schematisch eingezeichnet.

Allgemein muß die Codierung der Salve-Signale so beschaffen sein, daß dem Master ermöglicht wird, innerhalb einer bit-time (Zeichenlänge) eindeutig den Signalstrom vom Laststrom zu trennen.

Zur Abtastung der Information des Salve-Signals wird vorteilhaft anstatt des Gesamtstroms $I = I_L + I_S$ das Verhältnis von Laststrom $I_L$ zu Gesamtstrom $I$ ausgewertet. Ein durch den Zeittakt des Mastersignals synchronisierter Korrelationsempfänger erlaubt die sichere Abtastung beider Ströme mit anschließender Differenzbildung. Bei variablem Laststrom $I_L$ wird durch entsprechende Beschaltung mit einem Ladekondensator erreicht, daß der Gradient des Laststroms deutlich kleiner ist als der Gradient des Signalstroms $I_S$. Ein Beispiel für einen variablen Laststrom zeigt Fig. 4. Dort ist dem varaiblen Laststrom $I_L$ ein Signalstrom $I_S$ überlagert, wobei die Differenz zwischen maximalen und minimalen Wert des Signalstroms konstant ist.

**Patentansprüche**

1. Verfahren zur digitalen bidirektionalen Signalübertragung zwischen einer Steuereinheit (Master) und mehreren elektronischen Baugruppen (Slaves), **dadurch gekennzeichnet**, daß
   - der Master mit den einzelnen Slaves über jeweils eine leitende Verbindung gekoppelt ist, über die die bidirektionale Signalübertragung und die Stromversorgung der Slaves erfolgt,
   - das Mastersignal spannungscodiert und die Slavesignale stromcodiert werden,
   - das Mastersignal kontinuierlich mit festem Zeittakt gesendet wird, und die Slavesignale korreliert zum Zeittakt des Masters gesendet werden.

2. Verfahren nach Anspruch 1, **dadurch gekennzeichnet**, daß das Mastersignal bi-Phase-codiert ist.

3. Verfahren nach Anspruch 1 oder 2, **dadurch gekennzeichnet**, daß das niedrigste Spannungsniveau des Mastersignals größer als die Versorgungsspannung der Slaves gewählt wird.

4. Verfahren nach einem der vorangehenden Ansprüche, **dadurch gekennzeichnet**, daß die Slavesignale bi-Phase-codiert oder RZ- codiert werden.

5. Verfahren nach einem der vorangehenden Ansprüche, **dadurch gekennzeichnet**, daß die Slave-Signale sich additiv aus einem informationshaltigen Signalstrom und dem Laststrom der Slaves zusammensetzen.

6. Verfahren nach Anspruch 5, **dadurch gekennzeichnet,** daß zur Ermittlung des informationshaltigen Signalstroms Gesamtstrom und Laststrom einzeln abgestastet werden.

7. Verfahren nach einem der vorangehenden Ansprüche, **dadurch gekennzeichnet**, daß die Detektion der Master-Signale und Slave-Signale mit einem durch das Mastersignal synchronisiertem Korrelationsempfänger erfolgt.

# Fig.1

EP 0 583 716 A2

# Fig.2

Informationen

Takt-Signal

$U_2$

$U_1$

| Adr. | Daten | time-slot für Slave-Antwort | stand-by | Adr. | Daten | time-slot für Slave-Antwort |

0

# Fig. 3

Informationen — Takt-Signal

$U_2$
$U_1$
$0$ 1 0 0 1 0 0 0 0 0 0 0

$\sigma$

$J_L + J_S$
$J_L$
1 1 0 0 1 1 0

Bit-Time

EP 0 583 716 A2

Fig.4